# EUROPÄISCHE PATENTSCHRIFT

(11) **EP 2 966 337 B1**
(45) Veröffentlichungstag und Bekanntmachung des Hinweises auf die Patenterteilung: **12.10.2016**
(21) Anmeldenummer: 15174894.4
(22) Anmeldetag: 01.07.2015
(51) Int. Cl.: F16P 3/10

(54) **DREHMASCHINE MIT EINER ZWEITEN SCHUTZVORRICHTUNG FÜR DEN AUFNAHMEBEREICH AM SPINDELKOPF**
TURNING MACHINE WITH A SECOND PROTECTIVE DEVICE FOR THE RECEPTION AREA OF A SPINDLE HEAD
TOUR AVEC UN DEUXIÈME APPAREIL DE PROTECTION POUR UNE ZONE DE FIXATION D'UNE BROCHE

(30) Priorität: 10.07.2014 DE 202014103170 U
(43) Veröffentlichungstag der Anmeldung: 13.01.2016
(73) Patentinhaber: WEILER Werkzeugmaschinen GmbH, 91448 Emskirchen (DE)
(72) Erfinder: Wäger, Markus, 96178 Pommersfelden (DE); Lanzendörfer, Christoph, 91459 Markt Erlbach (DE); Eckardt, Markus, 91617 Oberdachstetten (DE)
(74) Vertreter: Mielke, Klaus

(56) Entgegenhaltungen:
- EP-A1- 2 732 912
- DE-A1-102011 002 547
- DE-U1- 20 314 078

## Beschreibung

Die Erfindung betrifft eine Drehmaschine mit einem Aufnahmebereich am Spindelstock zumindest für die Hauptspindel mit Spindelkopf und einer auf- bzw. eingesetzten Spanneinrichtung für ein Werkstück.

Aus der AT 509 708 A4 ist ein Werkzeugmagazin für einen Manipulator bekannt. Dieses ist regalartig aufgebaut und weist auf den Seiten dem Manipulator und einem Bediener zugewandte, gegenüberliegende Zugriffsöffnungen auf. Diese sind mit Schutzeinrichtungen versehen, besonders beweglich gelagerten, mechanisch trennenden Schutzwandelementen, die gekoppelt und wechselseitig aktivier- bzw. deaktivierbar sind. Der Manipulator wird stillgesetzt, wenn beide Schutzeinrichtungen offen sind. Ein manueller Eingriff einer Bedienperson bzw. ein automatischer Eingriff des Manipulators in das Werkzeugmagazin über die zugeordnete Schutzeinrichtung ist nur möglich, wenn die jeweils gegenüber liegende Schutzeinrichtung geschlossen und ein gleichzeitiger Eingriff von Bedienperson und Manipulator verhindert ist.

Aus der DE 103 00 105 A1 ist eine Werkzeugmaschine mit zwei Bearbeitungsvorrichtungen bekannt. Der Bearbeitungsraum ist durch eine Mittelblende zwischen den Bearbeitungsvorrichtungen unterteilt. Die Mittelblende ist öffen- und schließbar, um den Bearbeitungsvorrichtungen eine getrennte Bearbeitung bzw. eine Übergabe von Werkstücken zu ermöglichen. Die Werkzeugmaschine weist eine Haube mit zwei Vordertüren auf, worüber jeweils ein Eingriff in einen Teilarbeitsbereich und die dortige Bearbeitungsvorrichtung möglich ist. Die Bearbeitungsvorrichtungen sind nur aktiv, wenn Schließbedingungen der Vordertüren und Mittelblende erfüllt sind. So kann eine Bearbeitungsvorrichtung bei geschlossener Mittelblende und zugeordneter Vordertür aktiviert werden. Weiterhin können beide Bearbeitungsvorrichtungen bei geöffneter Mittelblende und geschlossenen Vordertüren aktiviert werden.

Weiterhin ist aus der DE 203 14 078 U1 eine Drehmaschine mit einem Drehfutterschutz bekannt. Dieser weist einen halbzylindrischen Schutzschild auf, der über zwei konzentrische drehbare Ringe am Spindelstock radial um den Mantel eines Spannfutters der Drehmaschine schwenkbar ist. Der Schutzschild kann bei einer Bearbeitung zwischen Bediener und Spannfutter eingeschwenkt werden und umfasst das Spannfutters somit nur halbseitig. Ein manueller Eingriff auf ein rotierendes Drehfutter von der nicht abdeckten Seite und von vorne kann jedoch nicht verhindert werden. Ein Schalter am Drehfutterschutz setzt den Drehantrieb still, falls sich der Schutzschild nicht in einer Position zwischen Bediener und Spannfutter befindet.

Die DE 10 2011 002 547 A offenbart eine Drehmaschine gemäß dem Oberbegriff des beigefügten Anspruchs 1. Für den Bediener besonders einer konventionellen Drehmaschine ist es häufig sehr wichtig, den Bearbeitungsvorgang eines Werkstücks unmittelbar visuell überwachen und gegebenenfalls schnell manuell eingreifen zu können. Die Ursache hierfür ist häufig darin zu sehen, dass besonders konventionelle Drehmaschine zur Herstellung von Einzel- bzw. Sonderteilen bzw. zur Ausbildung von Maschinenführern eingesetzt werden. In solchen Fällen hält sich ein Bediener unmittelbar an der Drehmaschine auf und muss in der Regel eine Fülle von Handgriffen an der Drehmaschine, am Werkstück, an der Spanneinrichtung des Werkstücks, am Werkzeug und vielem mehr in schneller Abfolge vornehmen. Es ist somit erforderlich und üblich, einen Bediener möglichst davor zu schützen, dass insbesondere dessen Finger- und Hände von rotierenden Teilen erfasst werden. Dabei stellt insbesondere der sogenannte Aufnahmebereich auf der dem Arbeitsraum zugewandten Seite des Spindelstocks einen besonderen Gefahrenbereich dar. Dort ist die Hauptspindel herausgeführt und auf den Spindelkopf eine Werkstückspanneinrichtung aufgesetzt, z.B. ein Drehfutter. In diesem Bereich ist eine Personengefährdung besonders groß, da enge Spalte zwischen der Spindelstockstirnseite und den rotierenden Teilen, insbesondere der Werkstückspanneinrichtung, vorliegen und auch häufig manuelle Eingriffe durch einen Bediener vorgenommen werden müssen.

Aus diesem Grund ist regelmäßig eine erste Schutzvorrichtung vorgesehen. Diese enthält einen Deckel, der über dem Aufnahmebereich zwischen einer geschlossenen bzw. offenen Position verschiebbar ist. Zudem ist eine erste elektrische Überwachungseinrichtung für den Deckel vorhanden. Diese gibt den Antrieb der Hauptspindel mittels einer Steuerung nur dann frei, wenn von der ersten elektrischen Überwachungseinrichtung die geschlossene Position des Deckels über dem Aufnahmebereich detektiert wird. Vorteilhaft kann die geschlossene bzw. offene Position des Deckels mittels Endschaltern überwacht werden. Mit einer solchen Schutzvorrichtung ist sichergestellt, dass ein Anlaufen der Drehmaschine erst dann möglich ist, wenn der Deckel über dem Aufnahmebereich geschlossen und damit insbesondere die darunter befindliche Werkstückspanneinrichtung abgedeckt ist.

Der Deckel dieser Schutzvorrichtung schränkt naturgemäß die Sicht eines Bedieners auf den Aufnahmebereich ein. Dies stellt kein Problem dar, solange die Abmessungen des Deckels und dessen Ausladung, d.h. dessen maximaler Überstand über dem Aufnahmebereich in der geschlossenen Position, mit der Größe der jeweiligen Werkstückspanneinrichtung korrespondieren. Diese Bedingung ist in der Regel erfüllt, wenn als Werkstückspanneinrichtung ein Drehfutter, z.B. ein Drei- oder Vierbackenfutter, eingesetzt wird. In diesem Fall erstreckt sich ein Dachbereich des Deckels in der geschlossenen Position soweit über den Aufnahmebereich, dass dessen vordere Stirnkante möglichst mit den am weitesten heraus stehenden Teilen eines Drehfutters, insbesondere dessen Spannbacken, fluchtet.

Es treten jedoch Probleme auf, wenn Werkstückspanneinrichtungen eingesetzt werden, die sich vom Spindelkopf aus weniger weit bis in den Arbeitsraum erstrecken. Dies ist insbesondere dann der Fall, wenn an Stelle eines Drehfutters eine Zugspannzange als Werkstückspanneinrichtung in den Spindelkopf eingesetzt ist. In diesem Fall wird ein größerer Bereich eines Werkstücks, welches von einer Zugspannzange im Spindelkopf gehalten wird, von dem Deckel der Schutzvorrichtung abgedeckt. Dieser kann somit in vielen Fällen nicht bearbeitet werden und muss zusätzlich zu dem Werkstückende, welches direkt von der Zugspannzange erfasst ist, nachträglich als Abfall abgetrennt werden. Andernfalls ist eine Bearbeitung des unmittelbar vor dem Eingriffsbereich einer Zugspannzange liegenden Segments eines Werkstücks nur möglich, wenn die Schutzvorrichtung in einer unzulässigen Weise vom Bediener außer Betrieb gesetzt wird, so dass ein Anlaufen der Drehmaschine auch bei geöffnetem Deckel über dem Aufnahmebereich möglich ist.

Der Erfindung liegt die Aufgabe zu Grunde eine Drehmaschine der oben angegebenen Art derart weiterzubilden, dass der Schutz eines Bedieners davor, dass insbesondere dessen Finger- und Hände von rotierenden Teilen erfasst werden, auch dann gewährleistet ist, wenn sich der Deckel der oben genannten Schutzvorrichtung in einem Ausnahmefall in einer geöffneten Position befindet.

Die Aufgabe wird gelöst mit der im Anspruch 1 angegebenen Drehmaschine. Vorteilhafte weitere Ausgestaltungen der Erfindung sind in den Unteransprüchen angegeben.

Die Erfindung eignet sich besonders für Drehmaschinen, die eine Direktaufnahme eines Werkstücks in der Hauptspindel z.B. mit Hilfe einer integrierten Zugspannzange als Werkstückspannvorrichtung ermöglichen. Die Erfindung bietet in einem solchen Fall den Vorteil, dass auch die Ausführung von Werkstückbearbeitungen direkt an der Spindel, d.h. in dem normalerweise durch den oben genannten Deckel abgedeckten Arbeitsbereich unmittelbar bis zur Werkzeugaufnahme, erleichtert und ermöglicht wird.

Hierzu ist die Drehmaschine zusätzlich zur oben genannten ersten Schutzvorrichtung aus einem Deckel mit überwachten Endpositionen erfindungsgemäß mit einer zweiten Schutzvorrichtung ausgestattet. Diese enthält eine Haube, die über den Spindelkopf mit auf- bzw. eingesetzter Werkstückspanneinrichtung stülpbar ist und eine Durchführung für ein Werkstück aufweist. Weiterhin ist für die Haube eine zweite elektrische Überwachungseinrichtung vorhanden. Die zweite elektrische Überwachungseinrichtung ist aktiviert, wenn von dieser eine vollständige Überstülpung der Haube über den Spindelkopf detektiert wird. Nur in diesem Fall wird die erste elektrische Überwachungseinrichtung der ersten Schutzvorrichtung von der Steuerung deaktiviert und der Antrieb der Hauptspindel freigegeben.

Die Erfindung bietet eine Verbesserung der Bedienbarkeit insbesondere einer konventionellen Drehmaschine unabhängig davon, ob als Werkstückspanneinrichtung ein großvolumiges Drehfutter auf den Spindelkopf aufgesetzt oder eine nur geringfügig überstehende Zugspannzange in den Spindelkopf eingesetzt ist. Besonders vorteilhaft ermöglicht die Erfindung einen automatischen, dynamischen Übergang zwischen diesen beiden Zuständen durch einfaches Abnehmen bzw. erneutes Überstülpen der mit der zweiten elektrischen Überwachungsvorrichtung ausgestatteten Haube der zweiten Schutzvorrichtung von dem bzw. auf den Spindelkopf.

Die Erfindung und weitere vorteilhafte Ausführungen derselben werden an Hand der in denen Figuren dargestellten Ausführungsbeispielen nachfolgend näher erläutert. Dabei zeigt
- Fig. 1: eine Draufsicht auf einen Ausschnitt einer Drehmaschine im Bereich des Spindelstocks, wobei beispielhaft ein Drehfutter als eine Werkstückspanneinrichtung auf die Hauptspindel aufgesetzt ist und der Deckel der ersten Schutzvorrichtung eine geschlossene Position einnimmt,
- Fig. 2: eine Draufsicht auf einen Ausschnitt einer Drehmaschine im Bereich des Spindelstocks, wobei beispielhaft eine Zugspannzange als eine Werkstückspanneinrichtung in die Hauptspindel eingesetzt ist und der Deckel der ersten Schutzvorrichtung eine geschlossene Position einnimmt,
- Fig. 3: eine Draufsicht auf einen vergrößerten Ausschnitt einer Drehmaschine im Bereich des Spindelstocks, wobei gemäß Fig. 2 eine Zugspannzange als eine Werkstückspanneinrichtung in die Hauptspindel eingesetzt und diese erfindungsgemäß durch eine zweite Schutzvorrichtung mit einer Haube und einer zweiten elektrischen Überwachungseinrichtung gesichert ist, obwohl der Deckel der ersten Schutzvorrichtung die geöffnete Position einnimmt, und
- Fig. 4: eine perspektivische Seitenansicht des in Fig. 3 gezeigten Ausschnitts einer Drehmaschine.

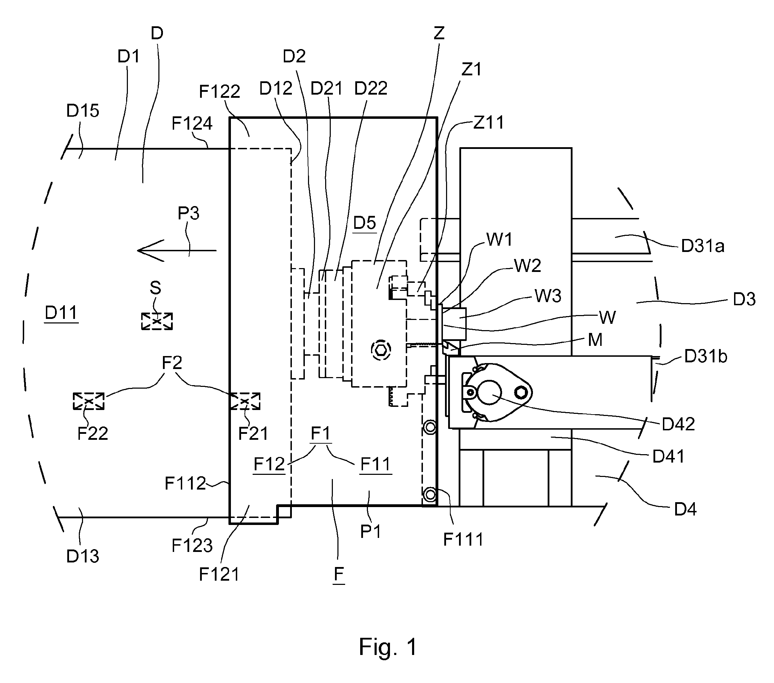

Fig. 1 zeigt eine Draufsicht auf einen Ausschnitt einer Drehmaschine D im Bereich des Spindelstocks D1, wobei beispielhaft ein Drehfutter Z1 als eine Werkstückspanneinrichtung Z auf die Hauptspindel D2 aufgesetzt ist und der Deckel F1 der ersten Schutzvorrichtung F eine geschlossene Position einnimmt.

Im Ausschnitt von Fig. 1 ist an der linken Seite die Oberseite D11 der Verkleidung des Spindelstocks D1 der Drehmaschinen D zu sehen, die nach unten von einer Bedienungsvorderseite D13, nach oben von einer Maschinenrückseite D15 und nach links von einer Spindelstockstirnseite D12 eingefasst wird. Rechts von der Spindelstockstirnseite D12 schließt sich der Arbeitsraum der Drehmaschinen an mit einem Aufnahmebereich D5 für das eine Ende eines Werkstücks W. Dabei ist die Hauptspindel D2 über eine Durchführung aus dem Spindelstock D1 herausgeführt. Im Inneren des Spindelstocks D1 ist in bekannter Weise eine Vielzahl von Aggregaten der Drehmaschine D angeordnet, insbesondere ein steuerbarer Antrieb für die Hauptspindel D2 und vieles mehr. Aus Gründen der besseren Übersicht sind diese in den Figuren nicht dargestellt. Lediglich eine Steuerung S für den Antrieb der Hauptspindel D2 ist durch ein strichliertes Rechteck symbolisiert. Diese kann auf einfache elektrische Weise oder auch elektronisch und programmgesteuert ausgeführt sein.

Auf den Spindelkopf D22 der Hauptspindel D2 ist über eine beispielhafte Bajonettscheibe D21 eine Werkstückspanneinrichtung Z aufgesetzt. Diese besteht im Beispiel der Fig. 1 aus einem Drehfutter Z1, z.B. einem Drei- oder Vierbackenfutter. Von deren Spannbacken Z11 wird ein Werkstück W an einem Ende erfasst. Weiterhin ist ein Maschinenbett D3 mit beispielhaften Führungsbahnen D31a, D31b am rechten Rand von Fig. 1 ausschnittsweise dargestellt. Auf diesem wird in bekannter Weise ein Werkzeugschlitten D4 für einen Drehmeißel M geführt. Ebenfalls nun ausschnittsweise und beispielhaft sind z.B. ein Planschlitten D41 und ein Schnellwechselhalter D42 für den Drehmeißel M gezeigt.

Der Aufnahmebereich D5 ist im Beispiel der Fig. 1 durch eine erste Schutzvorrichtung F gesichert. Diese enthält einen Deckel F1, der über dem Aufnahmebereich D5 zwischen einer geschlossenen, ausgefahrenen Position und einer offenen, eingefahrenen Position verschiebbar ist. In Fig. 1 befindet sich der Deckel F1 in geschlossener Position P1, so dass der Dachbereich F11 den Aufnahmebereich D5 darunter vollständig überdeckt. Aus diesem Grund sind in Fig. 1 darunter befindliche Elemente an der Spindelstockstirnseite D12, d.h. die herausgeführte Hauptspindel D2 mit aufgesetztem Drehfutter Z1 der Werkstückspannvorrichtung Z, in strichlierter Linie dargestellt. Dabei ist der Deckel F1 so weit ausgefahren, dass die Werkstückspannvorrichtung Z darunter vollständig abgedeckt wird.

Die Bearbeitung des Werkstücks W ist auch in dieser Position des Deckels F1 ohne weiteres möglich. Da die vordere Stirnkante F111 des Deckels F1 annähernd mit den Vorderkanten der Spannbacken Z11 fluchtet, kann der Drehmeißel M ungehindert fast vollständig bis auf Spannbacken Z11 herangefahren werden. Die Bearbeitungsebene W2 auf dem Werkstück, d.h. die Ansatzfläche für den Drehmeißel M liegt so nahe an den Spannbacken Z11, dass nur ein sehr kurzer unbearbeiteter Bereich W1 verbleibt. Damit steht nahezu die gesamte Oberfläche des Werkstücks W als bearbeitbarer Bereich W3 zur Verfügung.

Bei dem in Fig. 1 gezeigten Beispiel ist der Deckel F über einen streifenförmigen Auflagebereich F12 an der hinteren Stirnkante F112 auf der Oberseite D11 des Spindelstocks D1 aufgelegt, während der Dachbereich F11 des Deckels F1 in der gezeigten geschlossenen Position P1 des Deckels den darunter liegenden Aufnahmebereich D5 überspannt. Zur Ermöglichung einer Verschiebung des Deckels in Richtung P3 zur Erreichung der offenen Position P2 sind Führungsklammern F121, F122 vorgesehen im Beispiel der Fig. 1, die in entsprechenden ersten bzw. zweiten Führungsschienen F123, F124 an der Bedienungsvorderseite D13 bzw. der Maschinenrückseite D15 geführt sind.

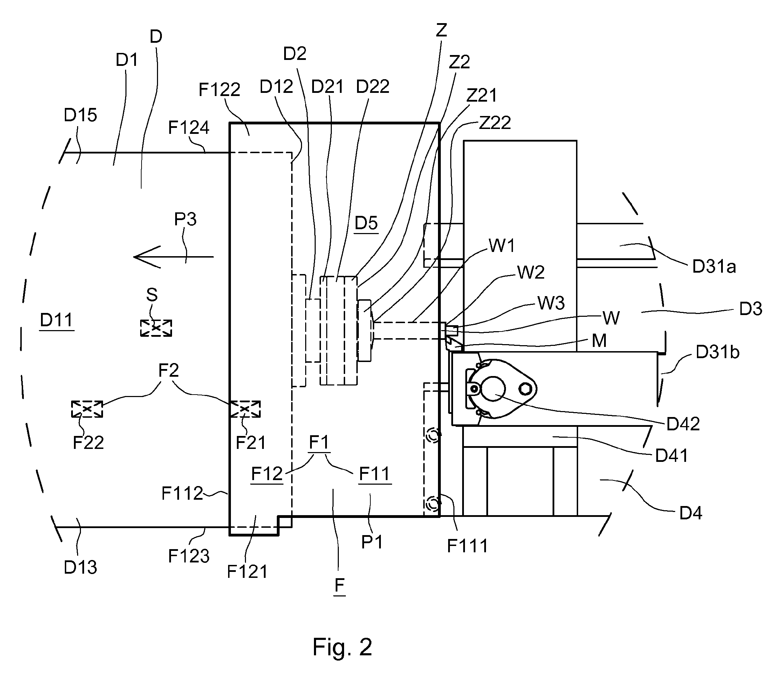

Fig. 2 zeigt eine Draufsicht auf einen der Darstellung von Fig. 1 entsprechenden Ausschnitt einer Drehmaschine D ebenfalls im Bereich des Spindelstocks D und des Aufnahmebereichs D5. Auch dabei befindet sich der Deckel F1 der ersten Schutzvorrichtung F in der geschlossenen Position P1. Da somit in Fig. 2 im Wesentlichen die gleichen Elemente wie in Fig. 1 gezeigt sind, kann auf die obigen Ausführungen verwiesen werden.

Der wesentliche Unterschied gegenüber der Anordnung von Fig. 1 besteht darin, dass im Beispiel der Fig. 2 anstelle eines Drehfutters eine Zugspannzange Z2 als Werkstückspanneinrichtung Z in die Hauptspindel D2 eingesetzt ist. Davon sind in Fig. 2 eine vorstehende Konushülse Z21 und eine darin geführte Spannzange Z22 zu sehen. Von dieser wird ein Werkstück W an einem Ende erfasst. Auf Grund der im Vergleich zu einem Drehfutter Z1 erheblichen kürzeren Bauweise der Zugspannzange Z2 stehen deren Spannzangen Z22 nur wenig über. Das Ende des davon erfassten Werkstücks W ragt somit im Beispiel der Fig. 2 annähernd im Zentrum des Dachbereichs F1 unter dem Deckel F1 aus den Spannzangen Z22 heraus. Dies hat zur Folge, dass das Werkstück W nur an dem über die vordere Stirnkante F111 hinausstehenden Bereich W3 bis zur Ebene W2 bearbeitbar ist. Der unter dem Deckel F liegende Bereich W1 ist nicht zugänglich, da der Werkzeugschlitten D4 mit den Aufbauten, besonders dem Schnellwechselhalter D42 und Drehmeißel M, an der vorderen Stirnkante F111 des in Position P1 befindlichen Deckels F1 anstößt.

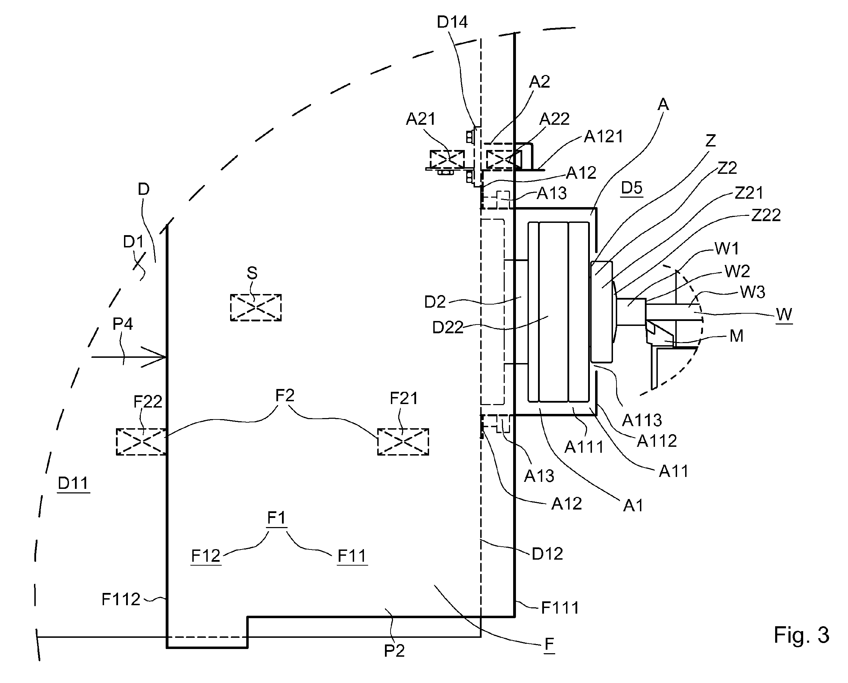

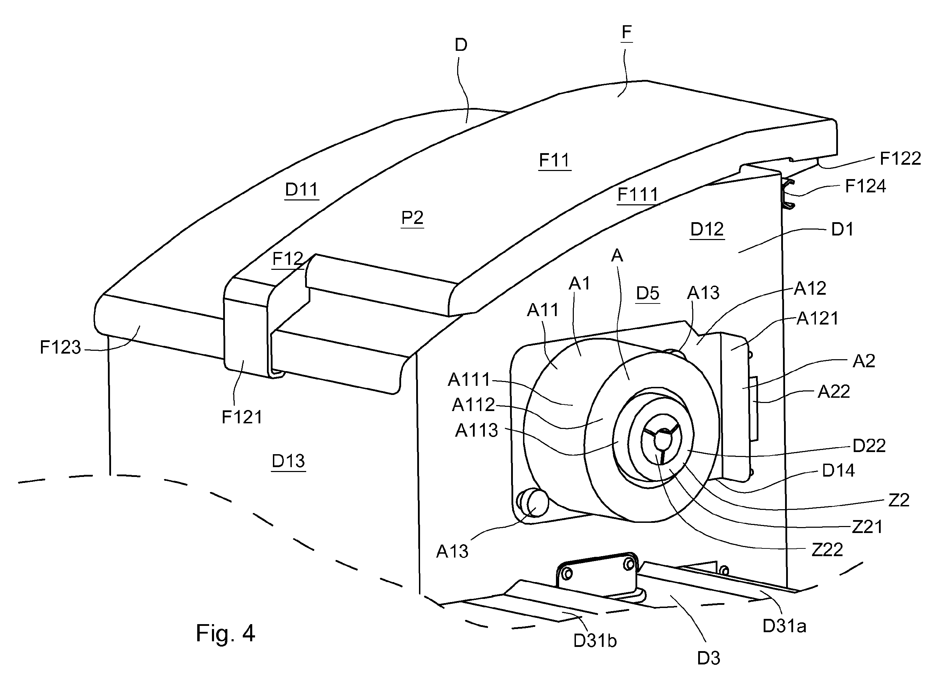

Im normalen Betriebszustand der ersten Schutzvorrichtung F werden die Endlagen des Deckels F1, d.h. die vollständig geschlossene bzw. geöffnete Position P1 bzw. P2, vorteilhaft durch die Endschalter einer ersten elektrischen Überwachungseinrichtung F2 überwacht. So wird im Beispiel der Figuren 1 und 2 ein vorderer Endschalter F21 in der geschlossenen, ausgefahrenen Position P1 des Deckels F1 über die hintere Stirnkante F112 aktiviert. Entsprechend wird ein hinterer Endschalter F22 in der offenen, eingefahrenen Position P2 des Deckels F1 wie in den Figuren 3 und 4 dargestellt über die hintere Stirnkante F112 aktiviert. Pfeile machen die Schubrichtung P3 in die offene Position bzw. die Schubrichtung P4 in die geschlossene Position kenntlich. Die Signale der Endschalter F21, F22 werden einer Steuerung S zugeführt, welche den Antrieb der Hauptspindel D2 nur dann freigibt, wenn der Endschalter F21 durch eine entsprechende Position P1 des Deckels F1 betätigt ist. Mittels einer geeigneten Verschaltung der beiden Endschalter F21, F22 kann zudem sichergestellt werden, dass sich der Deckel in der gewünschten Einbaulage auf der Oberseite D11 des Spindelstocks D1 befindet und nicht abmontiert ist.

Um im Beispiel der Fig. 2 auch eine Bearbeitung des Bereichs W1 des Werkstücks W zu ermöglichen, müsste die erste Schutzvorrichtung F in einer an sich unzulässigen Weise deaktiviert werden. Hierzu wäre der Deckel in Richtung P3 in die offene Position P2 zu verschieben. Zugleich wäre der Endschalter F21 manuell z.B. mit einem Werkzeug zu betätigen, um der Steuerung S die geschlossene Position des Deckels F1 vorzutäuschen und einen Anlauf des Antriebs der Hauptspindel D1 zu ermöglichen. Es ist offensichtlich, dass in diesem Zustand der Spindelkopf D22 und die Werkstückspanneinrichtung Z völlig frei liegen und die Gefahr besteht, dass ein Maschinenführer Verletzung an Fingern und Händen erleidet.

Die Erfindung ermöglicht es nun eine Drehmaschine durch eine zusätzliche zweite Schutzvorrichtung A für den Spindelkopf und die Werkstückspannvorrichtung zu sichern, auch wenn sich der Deckel F1 der ersten Schutzvorrichtung F insbesondere in einem Ausnahmefall in der geöffneten Position P2 befindet. Dies wird nachfolgend an den in den Figuren 3 und 4 dargestellten vorteilhaften Ausführungsbeispielen für eine entsprechend ausgestattete Drehmaschine erläutert.

So zeigt Fig. 3 eine Draufsicht auf einen vergrößerten Ausschnitt einer entsprechend erweiterten, beispielhaften Drehmaschine D im Bereich des Spindelstocks D1. Auch bei dieser ist analog Fig. 2 beispielhaft eine Zugspannzange Z2 als Werkstückspanneinrichtung Z in die Hauptspindel D2 eingesetzt. Fig. 4 zeigt schließlich eine perspektivische Seitenansicht auf den in Fig. 3 dargestellten Ausschnitt der Drehmaschine D mit Blick auf den Spindelkopf D22.

Erfindungsgemäß enthält die zweite Schutzvorrichtung A eine Haube A1, die komplett über den Spindelkopf D22 und eine auf- bzw. eingesetzte Werkstückspanneinrichtung W stülpbar ist. Die Haube A1 deckt somit diese rotierenden Komponenten rundum sicher ab und weist lediglich eine Durchführung A113 für ein Werkstück W auf, um eine Einführung und sichere Halterung des Werkstückendes in der im Inneren der Haube befindlichen Werkstückspanneinrichtung zu ermöglichen. Weiterhin ist die Haube A1 mit einer zweiten elektrischen Überwachungseinrichtung A2 ausgestattet. Sobald von der zweiten elektrischen Überwachungseinrichtung A2 eine vollständige Überstülpung der Haube A1 über den Spindelkopf D22 und die Werkstückspanneinrichtung W detektiert werden kann, ist diese aktiviert. Wird dieser aktive Zustand der zweiten elektrischen Überwachungseinrichtung A2 wiederum von der Steuerung erkannt, so wird die erste elektrische Überwachungseinrichtung F2 der ersten Schutzvorrichtung F deaktiviert und der Antrieb der Hauptspindel D2 freigegeben. In diesem Zustand ist sichergestellt, dass der Schutz eines Bedieners an Stelle der ersten Schutzvorrichtung F nun von einer zusätzlichen und ordnungsgemäß platzierten zweiten Schutzvorrichtung A sichergestellt ist. Wird die zweite Schutzvorrichtung A wieder abgenommen, so wird die erste Schutzvorrichtung F von der Steuerung S automatisch reaktiviert.

Die Erfindung ist besonders für konventionelle Drehmaschinen geeignet, bei der von einem Bediener häufiger die Werkstückspanneinrichtung gewechselt werden muss. Treten dabei Betriebszustände auf, insbesondere Werkstückbearbeitungen in unmittelbarer Nähe des Spindelkopfes, bei denen die erste Schutzvorrichtung F hinderlich ist, so kann diese durch eine gegebenenfalls nur vorübergehende Anbringung der zweiten Schutzvorrichtung A gefahrlos außer Kraft gesetzt werden.

Bei einer bevorzugten, weiteren Ausführung der Erfindung weist die Haube A1 Abmessungen auf, welche eine Überstülpung nur dann möglich machen, wenn als Werkstückspanneinrichtung Z eine Zugspannzange Z2 in den Spindelkopf D22 der Hauptspindel D2 eingesetzt ist. Eine solche Ausführung ist in den Figuren 3 und 4 beispielhaft dargestellt. Dabei sind die Abmessungen der Haube A1 vorteilhaft so kompakt gewählt, dass die Haube A1 nicht auf ein Drehfutter als Werkstückspanneinrichtung Z aufgesetzt werden kann. Auf diese Weise wird verhindert, dass die für einen solchen Betriebsfall vorgesehene und vorhandene erste Schutzvorrichtung F möglicherweise dauerhaft außer Kraft gesetzt und durch die zweite Schutzvorrichtung ersetzt wird. Stattdessen macht diese besonders vorteilhafte Ausführung der Erfindung eine klare Abgrenzung bei der Verwendung der beiden Schutzvorrichtungen möglich. So ist die erste Schutzvorrichtung aktiv, wenn eine großvolumige Werkstückspanneinrichtung, wie insbesondere ein Drehfutter, auf den Spindelkopf aufgesetzt ist. Diese wird durch Applikation der zweiten Schutzvorrichtung nur dann abgelöst, wenn eine kompakte Werkstückspanneinrichtung, wie insbesondere eine Zugspannzange, an den Spindelkopf abgebracht ist. Ein Maschinenbediener kann somit die Wirkungsweisen und damit die Einsatzbedingungen der beiden Schutzvorrichtungen eindeutig und fehlerfrei unterscheiden.

Gemäß einer weiteren vorteilhaften Ausführung der Erfindung, die in den Beispielen der Figuren 3, 4 bereits dargestellt ist, weist die Haube A1 einen Topf A11 auf, der die Hauptspindel D2 und eine auf- bzw. eingesetzte Spanneinrichtung Z für ein Werkstück W im aufgestülpten Zustand möglichst vollständig bis zu einer Stirnseite D12 des Spindelstocks D1 zum Aufnahmebereich D5 umfasst. Wie z.B. aus der Schnittdarstellung von Fig. 3 ersichtlich ist, liegt der Topf A11 in diesem Fall über einen Rand des Mantels A111 direkt auf der Oberfläche der Spindelstockstirnseite D12 auf und umfasst alle rotierenden Elemente am Spindelkopf D22 vollständig, besonders eine Werkstückspannvorrichtung Z. Lediglich eine Öffnung A113 im Boden des Topfes A11, die in den Beispielen der Fig. 3 und 4 von einem Bodenring A112 eingefasst ist, ermöglich einen eingeschränkten Zugang zum geschützten Innenbereich für eine Durchführung und Erfassung eines Werkstücks W durch die Spannzangen Z22 einer Werkstückspanneinrichtung Z.

Gemäß einer weiteren Ausführung ist die Haube A1 mit einem Flansch A12 ausgestattet. Dieser fasst den Topf A11 an einer der Werkstückdurchführung A113 gegenüber liegenden Seite zumindest teilweise ein und liegt im übergestülpten Zustand flach auf der Stirnseite D12 des Spindelstocks D1 auf. Eine solche Ausführung ist besonders gut in der perspektivischen Seitenansicht der Fig. 4 zu sehen. Der Flansch A12 erleichtert einerseits eine ordnungsgemäße und positionsrichtige Auflage der Haube A1 auf der Spindelstockstirnseite D12. Er ist aber darüber hinaus als Träger für Fixiermittel A13 zur Halterung des Flansches A12 an der Stirnseite D12 des Spindelstocks D1 geeignet. Im Beispiel der Figuren 3 und 4 dienen zwei Halteschrauben, welche annähernd diagonal zum Zentrum des Topfes A11 am Flansch A12 angreifen, als Fixiermittel A13 auf der Fläche der Stirnseite D12. Sind diese beispielweise als Rändelschrauben ausgeführt, so können diese von einem Maschinenbediener leicht manuell ein- bzw. wieder ausgedreht werden. Der Topf der zweiten Schutzvorrichtung A kann somit auf einfache und schnelle Weise bedarfsabhängig von einem Maschinenführer auf den Spindelkopf aufgesetzt bzw. wieder abgenommen werden.

Gemäß einer weiteren vorteilhaften Ausführung der Erfindung, die in den Beispielen der Figuren 3, 4 bereits dargestellt ist, weist die zweite elektrische Überwachungseinrichtung A2 der zweiten Schutzeinrichtung A einen Betätiger A22 an der Haube A1 und einen Lesekopf A21 im Inneren des Spindelstocks D1 auf. Dabei sind der Betätiger A22 und der Lesekopf A21 derart angeordnet, dass der Lesekopf A21 im übergestülpten Zustand der Haube A1 vom Betätiger A22 aktivierbar ist. Dies kann z.B. auf mechanische Weise durch einen Kontaktschalter erfolgen, der z.B. am Lesekopf angeordnet ist und im übergestülpten Zustand der Haube A1 durch den Betätiger A22 ausgelöst wird, z.B. mittels eines hervorstehenden Schaltstücks, welches durch die Spindelstockstirnseite D12 hindurch bis zu einem Kontaktschalter im Inneren des Spindelstocks D1 reicht.

Gemäß einer besonders vorteilhaften Ausführung der Erfindung ist die zweite elektrische Überwachungseinrichtung A2 bei Annäherung der Haube mittels eines Nahfeldes aktivierbar bzw. bei entsprechend großer Entfernung der Haube wieder deaktivierbar, insbesondere mittels einer magnetischen, elektromagnetischen oder optischen Wirkverbindung. Über ein solches Nahfeld kann von einem Maschinenbediener allein durch Hantierungen mit der Haube auf kontaktlose, berührungsfreie und fehlersichere Weise zwischen einer Betriebsbereitschaft der Schutzeinrichtung F bzw. A dynamisch umgeschaltet werden.

Bei der in den Figuren 3 und 4 dargestellten beispielhaften Ausführung ist der Betätiger A22 an einer Haltelasche A121 angebracht, die vom Flansch A12 der Haube A1 abgeht. Ist diese positionsrichtig auf den Spindelkopf D22 aufgestülpt, so ist der Betätiger A22 auf der Stirnseite D12 in unmittelbarer Nähe des Lesekopfes A21 quasi gegenüber liegend platziert. Abhängig von dem jeweiligen physikalischen Wirkungsprinzip des Nahfeldes kann der Raum zwischen Lesekopf und Betätiger offen sein, z.B. bei einem Nahfeld mit einer optischen Übertragungsstrecke.

Bei der im Beispiel der Figur 3 dargestellten besonders vorteilhaften Ausführung der Erfindung ist der Lesekopf A21 im übergestülpten Zustand der Haube A1 vom Betätiger A22 mittels einer magnetischen Wirkverbindung aktivierbar. Dabei befindet sich der Lesekopf A21 unmittelbar hinter einem Zwischenbleches D14 aus einem nicht magnetisierbaren Material, z.B. aus einem Chrom-Nickel Stahl oder Kunststoff, auf der anderen Seite im Inneren des Spindelstocks D1. In diesem Fall kann der Lesekopf A21 vorteilhaft zumindest einen Hallsensor aufweisen, der über einen im Betätiger befindlichen Dauermagneten aktivierbar ist. Bei einer besonders vorteilhaften Ausführung der Erfindung ist weist der Lesekopf A21 der zweiten elektrischen Überwachungseinrichtung A2 einen berührungslosen Sicherheitsschalter auf. Dieser kann zumindest 2-kanalig redundante Sicherheitssignale von einem dem Betätiger entgegennehmen, so dass die Gefahr von Fehlaktivierungen der zweiten Schutzvorrichtung reduziert wird.

Vorteilhaft können Lesekopf und/oder Betätiger mit zusätzlichen Mitteln zur Serienkodierung ausgestattet sein. Der Lesekopf ist dann nur von einem Betätiger A22 aktivierbar der eine Kodierung aufweist, welche zu der im Lesekopf A21 hinterlegten Serienkodierung korrespondiert. Der Lesekopf der zweiten elektrischen Überwachungseinrichtung und damit die gesamte zweite Schutzvorrichtung sind dann vor unerwünschten Manipulationen geschützt, d.h. können nicht durch unzulässige Austauschmittel, wie z.B. einen einzelnen Magnet und dergleichen aktiviert werden. Ist z.B. einer Drehmaschine nur eine stark limitierte Anzahl von entsprechend kodierten Betätigern zugeordnet, so ist eine Deaktivierung der ersten Schutzvorrichtung nur möglich, wenn ein Maschinenbediener eine mit einem solchen Betätiger ausgestattete Haube besitzt und in der oben beschriebenen Weise gemäß der Erfindung an der Drehmaschine angebracht hat. Dagegen ist die Ablösung der ersten durch eine zweite Schutzvorrichtung mit einer fremden, nicht entsprechend kodierten Haube nicht möglich.

### Bezugszeichenliste

- D: Drehmaschine (Ausschnitt)
- D1: Spindelstock
- D11: Oberseite der Spindelstockverkleidung
- D12: Spindelstockstirnseite arbeitsraumseitig mit Hauptspindeldurchführung
- D13: Bedienungsvorderseite
- D14: Zwischenblech, nicht magnetisierbar, z.B. Chrom-Nickel
- D15: Maschinenrückseite
- D2: Hauptspindel
- D21: Bajonettscheibe
- D22: Spindelkopf
- D3: Maschinenbett
- D31a, D31b: Führungsbahnen
- D4: Werkzeugschlitten
- D41: Planschlitten
- D42: Schnellwechselhalter
- D5: Aufnahmebereich mit Spindelkopf und Werkstückspanneinrichtung
- Z: Werkstückspanneinrichtung
- Z1: Drehfutter, z.B. Drei- oder Vierbackenfutter, Planscheibe
- Z11: Spannbacken
- Z2: Zugspannzange
- Z21: Konushülse
- Z22: Spannzange
- M: Drehmeißel
- W: Werkstück
- W1: unbearbeiteter Bereich
- W2: Bearbeitungsebene, d.h. Ansatzfläche für Drehmeißel
- W3: bearbeiteter Bereich
- S: elektrische Steuerung
- F: erste Schutzvorrichtung
- F1: Deckel über Aufnahmebereich, verschiebbar zwischen einer geschlossenen, ausgefahrenen und einer offenen, eingefahrenen Position
- F11: Dachbereich
- F111, F112: vordere, hintere Stirnkante
- F12: Auflagebereich
- F121, F122: Führungsklammern
- F123, F124: erste, zweite Führungsschiene
- F2: erste elektrische Überwachungseinrichtung für den Deckel
- F21: vorderer Endschalter für die geschlossene, ausgefahrene Position
- F22: hinterer Endschalter für die offene, eingefahrene Position
- P1: Deckel in der geschlossenen Position
- P3: Schubrichtung in die offene Position
- P2: Deckel in der offenen Position
- P4: Schubrichtung in die geschlossene Position
- A: zweite Schutzvorrichtung
- A1: Haube für Spindelkopf und Werkstückspanneinrichtung
- A11: Topf
- A111: Mantel
- A112: Bodenring
- A113: Durchführung für ein Werkstück
- A12: Flansch
- A121: Haltelasche für einen Betätiger
- A13: Fixiermittel, insbesondere Halteschrauben in Stirnseite D12
- A2: zweite elektrische Überwachungseinrichtung für die Haube, insbes. berührungslos und 2-kanalig für redundante Sicherheitssignale
- A21: Lesekopf im Spindelstock, insbesondere kodiert
- A22: Betätiger auf der Haube, insbesondere kodiert

## Patentansprüche

1. Drehmaschine (D) mit einem Aufnahmebereich (D5) am Spindelstock (D1) zumindest für die Hauptspindel (D2) mit Spindelkopf (D22) und einer auf- bzw. eingesetzten Spanneinrichtung (Z) für ein Werkstück (W), und mit
a) einer Steuerung (S) zumindest für den Antrieb der Hauptspindel (D1),
b) einer ersten Schutzvorrichtung (F), mit
b1) einem Deckel (F1), der über dem Aufnahmebereich (D5) zwischen einer geschlossenen bzw. offenen Position (P1, P2) verschiebbar ist, und
b2) einer ersten elektrischen Überwachungseinrichtung (F2) für den Deckel (F1), die den Antrieb der Hauptspindel (D2) nur dann freigibt, wenn die geschlossene Position (P1) des Deckels (F1) über dem Aufnahmebereich (D5) detektierbar ist,
**dadurch gekennzeichnet, dass**
c) die Drehmaschine (D) eine zweite Schutzvorrichtung (A) aufweist, mit
c1) einer Haube (A1), die über den Spindelkopf (D22) mit auf- bzw. eingesetzter Werkstückspanneinrichtung (Z) stülpbar ist und eine Durchführung (A113) für ein Werkstück (W) aufweist, und mit
c2) einer zweiten elektrischen Überwachungseinrichtung (A2) für die Haube (A1), die nur dann aktiviert ist, wenn von dieser eine vollständige Überstülpung der Haube (A1) detektiert wird, und
d) die Steuerung (S) die erste elektrische Überwachungseinrichtung (F2) nur dann deaktiviert und den Antrieb der Hauptspindel (D2) freigibt, wenn die zweite elektrische Überwachungseinrichtung (A) aktiviert ist.

2. Drehmaschine (D) nach Anspruch 1, wobei die Haube (A1) aufweist
einen Topf (A11), der die Hauptspindel (D2) und eine auf- bzw. eingesetzte Spanneinrichtung (Z) für ein Werkstück (W) im aufgestülpten Zustand möglichst vollständig bis zu einer Stirnseite (D12) des Spindelstocks (D1) zum Aufnahmebereich (D5) umfasst.

3. Drehmaschine (D) nach Anspruch 2, wobei die Haube (A1) aufweist
a) einen Flansch (A12), der den Topf (A11) an einer der Werkstückdurchführung (A113) gegenüber liegenden Seite zumindest teilweise einfasst und im übergestülpten Zustand auf der Stirnseite (D12) des Spindelstocks (D1) aufliegt, und
b) Fixiermittel (A13) zur Halterung des Flansches (A12) an der Stirnseite (D12) des Spindelstocks (D1).

4. Drehmaschine (D) nach einem der vorangegangenen Ansprüche, wobei die Haube (A1)
Abmessungen aufweist, welche eine Überstülpung nur dann ermöglichen, wenn als Werkstückspanneinrichtung (Z) eine Zugspannzange (Z2) in den Spindelkopf (D22) der Hauptspindel (D2) eingesetzt ist.

5. Drehmaschine (D) einem der vorangegangenen Ansprüche, wobei
die zweite elektrische Überwachungseinrichtung (A2) bei Annäherung der Haube (A1) mittels eines Nahfeldes auf berührungslose Weise aktivierbar bzw. bei entsprechender Entfernung der Haube (A1) wieder deaktivierbar ist.

6. Drehmaschine (D) Anspruch 5, mit einem Nahfeld mit
einer magnetischen, elektromagnetischen oder optischen Wirkverbindung zwischen der Haube (a1) und der zweiten elektrischen Überwachungseinrichtung (A2).

7. Drehmaschine (D) nach einem der vorangegangenen Ansprüche, wobei die zweite elektrische Überwachungseinrichtung (A2) aufweist
einen Betätiger (A22) an der Haube (A1) und einen Lesekopf (A21) im Inneren des Spindelstocks (D1), wobei Betätiger (A22) und Lesekopf (A21) derart angeordnet sind, dass der Lesekopf (A21) im übergestülpten Zustand der Haube (A1) vom Betätiger (A22) aktivierbar ist.

8. Drehmaschine (D) nach Anspruch 7, wobei
der Lesekopf (A21) im übergestülpten Zustand der Haube (A1) vom Betätiger (A22) mittels einer magnetischen Wirkverbindung aktivierbar ist.

9. Drehmaschine (D) nach Anspruch 8, wobei
der Lesekopf (A21) zumindest einen Hallsensor aufweist, welcher von zumindest einem Dauermagneten am Betätiger (A22) aktivierbar ist.

10. Drehmaschine (D) nach Anspruch 7, 8 oder 9, mit
einem berührungslosen Sicherheitsschalter als Lesekopf (A21).

11. Drehmaschine (D) nach einem der Ansprüche 7 bis 10, wobei
der Lesekopf (A21) und/oder der Betätiger (A22) mit Mitteln zur Serienkodierung ausgestattet ist, so dass der Lesekopf nur von einem Betätiger (A22) mit einer Kodierung aktivierbar ist, welche zu der im Lesekopf (A21) hinterlegten Serienkodierung korrespondiert.

## Claims

1. Turning machine (D) having a receptacle region (D5) on the head stock (D1) at least for the main spindle (D2) having a spindle head (D22) and a clamping jig (Z) for a workpiece (W), and having
a) a controller (S) at least for the drive of the main spindle (D1),
b) a first protective device (F), having
b1) a cover (F1) which above the receptacle region (D5) is displaceable between a closed and an open position (P1, P2), respectively; and
b2) a first electric monitoring installation (F2) for the cover (F1), the former releasing the drive of the main spindle (D2) only when the closed position (P1) of the cover (F1) is detectable above the receptacle region (D5);
**characterized in that**
c) the turning machine (D) has a second protective device (A), having
c1) a hood (A1) which is imposable onto the spindle head (D22), the latter having a workpiece clamping jig (Z) placed thereon or inserted therein, respectively, and a lead-through (A113) for a workpiece (W); and having
c2) a second electric monitoring installation (A2) for the hood (A1), the former being activated only upon detection of complete superimpositioning of the hood (A1); and
d) the controller (S) deactivates the first electric monitoring installation (F2) and releases the drive of the main spindle (D2) only when the second electric monitoring installation (A) is activated.

2. Turning machine (D) according to Claim 1, wherein the hood (A1) has a cup (A11) which in the imposed state as far as possible entirely encompasses the main spindle (D2) and a fitted or inserted clamping jig (Z) for a workpiece (W), respectively, up to an end side (D12) of the head stock (D1) towards the receptacle region (D5).

3. Turning machine (D) according to Claim 2, wherein the hood (A1) has
a) a flange (A12) which at least partially borders the cup (A11) on a side which is opposite the workpiece lead-through (A113), and in the superimposed state bears on the end side (D12) of the head stock (D1); and
b) fixing means (A13) for mounting the flange (A12) on the end side (D12) of the head stock (D1).

4. Turning machine (D) according to one of the preceding claims, wherein the hood (A1) has dimensions which enable superimpositioning only when a draw-in collet (Z2) is inserted as a workpiece clamping jig (Z) into the spindle head (D22) of the main spindle (D2).

5. Turning machine (D) according to one of the preceding claims, wherein the second electric monitoring installation (A2) is activatable upon approach by the hood (A1) by means of a near field and is again de-activatable upon corresponding departure of the hood (A1), respectively, in a noncontacting manner.

6. Turning machine (D) according to Claim 5, having a near field having a magnetic, electromagnetic, or optical operational connection between the hood (a1) and the second electric monitoring installation (A2).

7. Turning machine (D) according to one of the preceding claims, wherein the second electric monitoring installation (A1) has an actuator (A22) on the hood (A2), and a reading head (A21) in the interior of the head stock (D1), wherein the actuator (A22) and the reading head (A21) are disposed in such a manner that the reading head (A21) in the superimposed state of the hood (A1) is activatable by the actuator (A22).

8. Turning machine (D) according to Claim 7, wherein the reading head (A21) in the superimposed state of the hood (A1) is activatable by the actuator (A22) by means of a magnetic operational connection.

9. Turning machine (D) according to Claim 8, wherein the reading head (A21) has at least one Hall sensor which is activatable by at least one permanent magnet on the actuator (A22).

10. Turning machine (D) according to Claim 7, 8, or 9, having a non-contacting safety switch as the reading head (A21).

11. Turning machine (D) according to one of Claims 7 to 10, wherein the reading head (A21) and/or actuator (A22), respectively, is equipped with means for serial coding such that the reading head is activatable only by an actuator (A22) having a coding which corresponds to the serial code which is stored in the reading head (A21).

## Revendications

1. Tour (D) avec une zone de logement (D5) sur la poupée fixe (D1) au moins pour la broche principale (D2) avec un nez de broche (D22) et un système de serrage (Z) emboîté ou inséré pour une pièce à usiner (W) et avec
a) un système de commande (S) au moins pour l'entraînement de la broche principale (D1),
b) un premier dispositif de protection (F), avec
b1) un couvercle (F1) qui est susceptible de se déplacer par l'intermédiaire de la zone de logement D5 entre une position fermée ou ouverte (P1, P2) et
b2) un premier système de supervision (F2) électrique pour le couvercle (F1) qui ne libère l'entraînement de la broche principale (D2) que lorsque la position (P1) fermée du couvercle (F1) sur la zone de logement (D5) est détectable,
**caractérisée en ce que** c) la tour (D) comporte un deuxième dispositif de protection (A), avec
c1) un capot (A1) qui est susceptible d'être retourné par-dessus le nez de broche (D22) avec système de serrage (Z) emboîté ou inséré de la pièce à usiner et qui comporte un passage (A113) pour une pièce à usiner (W) et avec
c2) un deuxième système de supervision (A2) électrique pour le capot (A1) qui n'est activé que s'il détecte un recouvrement complet du capot (A1) et
d) le système de commande (S) ne désactive le premier système de supervision (F2) électrique et ne libère l'entraînement de la broche principale (D2) que si le deuxième système de supervision (A) électrique est activé.

2. Tour (D) selon la revendication 1, le capot (A1) comportant
un pot (A11) qui lorsqu'il est emboîté englobe la broche principale (D2) et un système de serrage (Z) emboîté ou inséré pour une pièce à usiner (W) le plus totalement possible jusqu'à une face frontale (D12) de la poupée fixe (D1) vers la zone de logement (D5).

3. Tour (D) selon la revendication 2, le capot (A1) comportant :
a) une bride (A12) qui enchâsse au moins en partie le pot (A11) sur une face opposée au passage (A113) pour la pièce à usiner et qui en position emboîtée repose sur la face frontale (D12) de la poupée fixe (D1) et
b) des moyens de fixation (A13) pour maintenir la bride (A12) sur la face frontale (D12) de la poupée fixe (D1).

4. Tour (D) selon l'une quelconque des revendications précédentes, le capot (A1)
présentant des dimensions, lesquelles ne permettent un emboîtement que si en tant que système de serrage (Z) de la pièce à usiner, il est utilisé une pince contrainte en traction (Z2) dans le nez de broche (D22) de la broche principale (D2).

5. Tour (D) selon l'une quelconque des revendications précédentes,
à l'approche du capot (A1), le deuxième système de supervision (A2) électrique étant activable sans contact, au moyen d'un champ proche ou en cas d'éloignement correspondant du capot (A1) étant de nouveau désactivable.

6. Tour (D) selon la revendication 5, avec un champ proche avec
une liaison active magnétique, électromagnétique ou optique entre le capot (a1) et le deuxième système de supervision (A2) électrique.

7. Tour (D) selon l'une quelconque des revendications précédentes, le deuxième système de supervision (A2) électrique comportant :
un actionneur (A22) sur le capot (A1) et une tête de lecture (A21) à l'intérieur de la poupée fixe (D1), l'actionneur (A22) et la tête de lecture (A21) étant placés de sorte que lorsque le capot (A1) est emboîté, la tête de lecture (A21) soit activable par l'actionneur (A22).

8. Tour (D) selon la revendication 7,
lorsque le capot (A1) est emboîté, la tête de lecture (A21) étant activable par l'actionneur (A22) au moyen d'une liaison active magnétique.

9. Tour (D) selon la revendication 8,
la tête de lecture (A21) comportant au moins un capteur de Hall qui est activable par au moins un aimant permanent sur l'actionneur (A22).

10. Tour (D) selon la revendication 7, la revendication 8 ou la revendication 9, avec
un interrupteur de sécurité sans contact en tant que tête de lecture (A21).

11. Tour (D) selon l'une quelconque des revendications 7 à 10,
la tête de lecture (A21) et/ou l'actionneur (A22) étant équipés de moyen de codage en série, de sorte que la tête de lecture ne soit activable que par un actionneur (A22) avec un codage qui correspond au codage en série sauvegardé dans la tête de lecture (A21).
